# FASCICULE DE BREVET EUROPEEN

(11) **EP 3 823 804 B1**
(45) Date de publication et mention de la délivrance du brevet: **28.06.2023**
(21) Numéro de dépôt: 19769223.9
(22) Date de dépôt: 10.07.2019
(51) Int. Cl.: B29C 33/10, B29D 30/06, B29C 33/38

(54) **PROCEDE DE REALISATION D'UN ELEMENT MOULANT COMPRENANT UN MOYEN D'EVENTATION**
VERFAHREN ZUR HERSTELLUNG EINES FORMELEMENTS MIT EINER ENTLÜFTUNGSEINRICHTUNG
METHOD FOR PRODUCING A MOULDING ELEMENT COMPRISING A VENTING MEANS

(30) Priorité: 21.07.2018 FR 1870847
(43) Date de publication de la demande: 26.05.2021
(73) Titulaire: Compagnie Générale des Etablissements Michelin, 63000 Clermont-Ferrand (FR)
(72) Inventeur: CALVEL, Romain, 63040 Clermont-Ferrand Cedex 9 (FR); LESMARIE, Michel, 63040 Clermont-Ferrand Cedex 9 (FR)
(74) Mandataire: Roussy, Delphine
(86) Numéro de dépôt international: PCT/IB2019/055860
(87) Numéro de publication internationale: WO 2020/021368

(56) Documents cités:
- DE-A1- 10 131 130
- DE-A1-102014 216 865

## Description

### DOMAINE TECHNIQUE DE L'INVENTION

La présente invention concerne un procédé de réalisation d'un élément moulant destiné à être assemblé dans un moule pour le moulage d'un pneumatique selon la revendication 1.

Les revendications dépendantes se référent à des modes de réalisation préférés de l'invention,

### ETAT DE LA TECHNIQUE ANTERIEURE

Lors du processus de moulage et de vulcanisation des pneumatiques, les effets combinés de la pression, de la température et des réactions chimiques en cours génèrent une certaine quantité de gaz qui doit être libérée du moule pendant le moulage. Pour mettre en place des moyens d'évacuation des gaz, les industriels utilisent en général une solution consistant à utiliser des moules dont la couronne externe comporte des petits trous formant une pluralité des tunnels d'évacuation répartis sur la circonférence du moule. Cette approche est certes efficace pour assurer le passage des gaz, mais produit à la surface de la bande de roulement des picots, de forme correspondante au profil des trous, formés par le mélange caoutchoutique qui a tendance à fluer dans les ouvertures d'éventation. Ces picots, disséminés sur la périphérie de la bande de roulement et souvent sur une portion des flancs du pneumatique, affectent l'esthétique du produit final et perdurent tant et aussi longtemps que le pneumatique n'a pas roulé un certain nombre de kilomètres. Pour éviter la présence de ces picots, les industriels recherchent depuis longtemps une solution pour permettre le flux d'air ou de gaz vers l'extérieur du moule, sans toutefois altérer le produit nouvellement moulé.

Le document EP1361042 décrit un moule pour pneumatique comportant une couronne périphérique feuilletée. Cette couronne est constituée par un empilage dans la direction circonférentielle d'une pluralité de tôles de faible épaisseur. Des découpes réparties sur plusieurs tôles adjacentes augmentent le potentiel d'éventation du moule. Ce mode de réalisation est efficace pour un moule feuilleté uniquement. Un autre procédé de réalisation d'un élément moulant comprenant des moyens d' éventation est connu du document DE 10 2014 216865 A.

Il existe donc un besoin pour un moule favorisant l'évacuation de l'air pendant le moulage, mais sans affecter l'esthétique du pneumatique moulé.

Pour pallier ces différents inconvénients, l'invention prévoit différents moyens techniques.

### EXPOSE DE L'INVENTION

Tout d'abord, un premier objet de l'invention consiste à prévoir un procédé de réalisation d'élément moulant pour le moulage de la partie extérieure de la bande de roulement d'un pneumatique permettant l'évacuation de l'air libéré lors des phases de vulcanisation, sans formation de picots à la surface de la bande de roulement.

Un autre objet de l'invention consiste à prévoir un procédé de réalisation d'un élément moulant pour le moulage de la partie extérieure de la bande de roulement d'un pneumatique permettant de s'assurer que les moyens d'éventation réalisés sont bien fonctionnels.

Pour ce faire, l'invention prévoit un procédé de réalisation d'un élément moulant destiné à être assemblé dans un moule pour le moulage d'un pneumatique, ledit élément moulant comprenant une surface de moulage adaptée pour le moulage d'une partie du pneumatique et une surface externe opposée à la surface de moulage, des moyens d'éventation adaptés pour l'évacuation d'un flux d'air de la surface de moulage vers la surface externe, lesdits moyens d'éventation comprenant une première partie de largeur minimale L1 comprise entre 0.03mm et 0.07mm et de profondeur P1 inférieure ou égale à 3mm, ladite première partie étant une fente débouchant sur la surface de moulage et une deuxième partie en communication avec la première partie et débouchant sur la surface externe, la largeur L2 de la deuxième partie étant comprise entre 1 mm et 5mm et plus préférentiellement entre 2mm et 3mm, ledit procédé comprenant les étapes suivantes:
i) une étape de réalisation par laser de la première partie dans l'élément de moulage;
ii) une étape de réalisation par usinage de la deuxième partie dans l'élément de moulage, la profondeur P1 de la fente étant supérieure de 0.1 à 1 mm à l'épaisseur EP de la paroi résultant de l'usinage;
iii) l'étape de réalisation de la deuxième partie est réalisée avant l'étape de réalisation de la première partie.

**Si** la première partie était réalisée avant la deuxième partie, il y aurait un important risque d'obstruction de la première partie avec les débris et poussières générées lors de la réalisation de la deuxième partie, car le passage libre de la première partie est de faible dimension. Le procédé ci-dessus permet, en réalisant la première partie après la deuxième partie, d'éviter le risque d'obstruction de la première partie. En pratique, dans un élément moulant, une pluralité de moyens d'éventation sont en général prévus. On prévoit avantageusement d'effectuer simultanément plusieurs deuxièmes parties, puis plusieurs premières parties.

Selon un mode de réalisation avantageux, la première partie forme un parcours dont les deux extrémités sont disjointes.

Selon un autre mode de réalisation avantageux, la première partie est réalisée par laser guidé par jet d'eau. Le laser guidé par jet d'eau permet de pratiquer une fente de faible largeur de façon précise, fiable et économique.

Selon un autre exemple, la deuxième partie est réalisée par perçage. On utilise par exemple, un foret à embout conique.

Puisque la deuxième partie est réalisée par usinage, on utilise par exemple une fraise à bout plat.

Selon un mode de réalisation avantageux, la première partie et la deuxième partie sont réalisées sur des machines à cinq axes. Ce type de machine procure une grande souplesse de mise en oeuvre et permet de réaliser pratiquement tout type de profil de fente.

Selon divers modes de réalisation avantageux, la deuxième partie est une cavité, ou une rainure. La première partie est selon l'invention une fente.

Selon l'invention, la profondeur P1 de la fente est supérieure de 0,1 à 1 mm à l'épaisseur EP de la paroi résultant de l'usinage. Cette caractéristique permet de sécuriser la mise en oeuvre afin de s'assurer que la première partie est suffisamment profonde pour permettre la communication avec la deuxième partie, en prenant en compte les tolérances de fabrication.

Selon un exemple avantageux, la deuxième partie est centrée sur la première partie. Ce mode de réalisation est le plus favorable pour faciliter l'évacuation de l'air hors du moule.

En variante, la deuxième partie est désaxée par rapport à la première partie. Ce désaxage est possible dans la mesure où la communication est toujours maintenue et assurée.

### DESCRIPTION DES FIGURES

Tous les détails de réalisation sont donnés dans la description qui suit, complétée par les figures 1a à 2, présentées uniquement à des fins d'exemples non limitatifs, et dans lesquelles:
- la figure 1a est une vue en perspective d'un exemple de réalisation d'un élément moulant avec une fente d'évacuation d'air divergente ;
- la figure 1b est une vue en perspective d'un exemple de réalisation d'un élément moulant avec une fente d'évacuation d'air convergente ;
- la figure 1c est une vue en coupe de l'élément moulant de la figure 1b ;
- la figure 2 illustre plusieurs variantes de réalisation des moyens d'éventation avec diverses positions relatives des premières et deuxièmes parties.

### DESCRIPTION DETAILLEE DE L'INVENTION

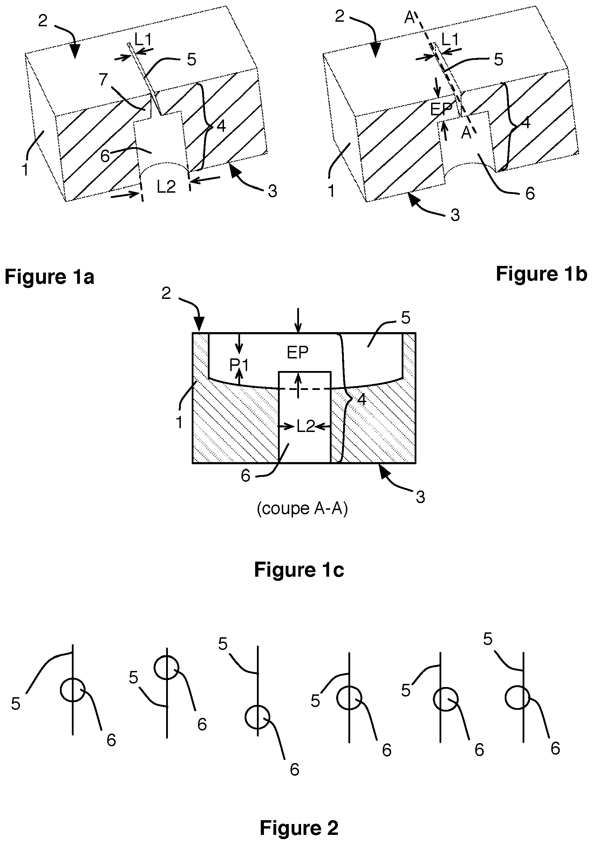

Les figures 1a et 1b illustrent un exemple de réalisation d'un élément moulant 1 dans lequel un moyen d'éventation 4 relie une surface de moulage 2 et une surface externe 3 dudit élément moulant 1. Ledit moyen d'éventation comporte une première partie 5 et une deuxième partie 6. La première partie 5 est en communication avec la deuxième partie 6 et jouxte la surface de moulage 2. La deuxième partie 6 est en communication avec la première partie 5 et débouche sur la surface externe 3. Dans cet exemple de réalisation, la première partie est réalisée par un laser guidé par un jet d'eau. La largeur de la première partie 5 est comprise entre 0,03mm et 0,07mm et sa profondeur P1 est inférieure ou égale à 3mm. Cette profondeur correspond à la limite de précision suffisante pour la réalisation de la première partie 5. Au delà de 3mm, le laser guidé par un jet d'eau ne permet pas de réaliser la première partie 5 dans des conditions optimales afin que ladite première partie corresponde aux caractéristiques données. La largeur L2 de la deuxième partie 6 est comprise entre 1mm et 5mm, et plus préférentiellement entre 2mm et 3mm.

Le procédé de réalisation de l'élément moulant 1 comprend les étapes suivantes, effectuées de façon successive, dans l'ordre suivant :
a) réalisation de la deuxième partie 6 dans l'élément de moulage,
b) réalisation par laser de la première partie 5 dans l'élément de moulage, de façon à ce que la première partie 5 et la deuxième partie 6 soient en communication.

Cette communication entre les deux parties permet le passage de l'air à éventer entre celles-ci. La première partie 5 est réalisée après la deuxième partie 6 pour éviter qu'un copeau ou rebut de coupe ou d'usinage ne vienne obstruer la première partie si celle-ci était réalisée avant la deuxième partie. A l'inverse, les copeaux de matière résultants de la réalisation de la première partie 5 après la deuxième partie 6, ne risquent pas de boucher ladite deuxième partie 6 compte tenu de ses grandes dimensions en regard de la première partie 5.

La deuxième partie 6 est réalisée par perçage en utilisant un foret à embout conique par exemple. Dans une variante, la deuxième partie 6 est réalisée par usinage, en utilisant une fraise à bout plat par exemple, de préférence sur une machine à cinq axes. Dans les exemples de réalisation, la deuxième partie 6 est une cavité, telle qu'illustrée aux figures 1a à 2. En variante, la deuxième partie 6 est une rainure.

Dans les figures 1a à 2, la première partie 5 est une fente formant un parcours dont les deux extrémités sont disjointes. La fente est de forme sensiblement allongée dans les exemples de réalisation illustrés. En variante, la fente est en forme de droite, de ligne brisée, d'ondulations, de zigzags, d'arc de cercle ou toute autre forme dans laquelle les extrémités ne sont pas en contact l'une avec l'autre. La première partie 5 a une profondeur P1 supérieure de 0,1mm à 1mm à l'épaisseur EP de la paroi résultant de l'usinage, tel qu'illustré à la figure 1c.

La figure 2 illustres différentes variantes de réalisation de la fente par rapport au perçage de la deuxième partie 6. Dans les quatre premiers exemples, la deuxième partie est centrée sur la première partie. Dans les deux derniers exemples, la deuxième partie 6 est désaxée par rapport à la première partie 5. Les deux parties peuvent être plus ou moins désaxées, à condition qu'au moins une portion de chacune des deux parties soit en communication avec l'autre partie. La communication est ainsi toujours assurée.

**Numéros de référence employés sur les figures**

| | |
|---|---|
| 1 | Elément moulant |
| 2 | Surface de moulage |
| 3 | Surface externe |
| 4 | Moyen d'éventation |
| 5 | Première partie |
| 6 | Deuxième partie |
| 7 | Paroi résultant de l'usinage |

## Revendications

1. Procédé de réalisation d'un élément moulant (1 ) destiné à être assemblé dans un moule pour le moulage d'un pneumatique, ledit élément moulant (1 ) comprenant une surface de moulage (2) adaptée pour le moulage d'une partie du pneumatique et une surface externe (3) opposée à la surface de moulage, des moyens d'éventation (4) adaptés pour l'évacuation d'un flux d'air de la surface de moulage (2) vers la surface externe (3), lesdits moyens d'éventation (4) comprenant une première partie (5) de largeur minimale L1 comprise entre 0,03mm et 0,07mm et de profondeur P1 inférieure ou égale à 3mm, ladite première partie (5) étant une fente débouchant sur la surface de moulage (2) et une deuxième partie (6) en communication avec la première partie (5) et débouchant sur la surface externe (3), la largeur L2 de la deuxième partie étant comprise entre 1 mm et 5mm et plus préférentiellement entre 2mm et 3mm, ledit procédé comprenant les étapes suivantes:
i) une étape de réalisation par laser de la première partie (5) dans l'élément de moulage,
ii) une étape de réalisation par usinage de la deuxième partie (6) dans l'élément de moulage, la profondeur P1 de la fente étant supérieure de 0,1 à 1 mm à l'épaisseur EP de la paroi (7) résultant de l'usinage ;
iii) l'étape de réalisation de la deuxième partie (6) est réalisée avant l'étape de réalisation de la première partie (5).

2. Procédé de réalisation d'un élément moulant (1 ) destiné à être assemblé dans un moule pour le moulage d'un pneumatique selon la revendication 1 , dans lequel la première partie (5) forme un parcours dont les deux extrémités sont disjointes.

3. Procédé de réalisation d'un élément moulant (1 ) destiné à être assemblé dans un moule pour le moulage d'un pneumatique selon l'une des revendications 1 ou 2, dans lequel la première partie (5) est réalisée par laser guidé par jet d'eau.

4. Procédé de réalisation d'un élément moulant (1 ) destiné à être assemblé dans un moule pour le moulage d'un pneumatique selon l'une des revendications1 à 3, dans lequel la première partie et la deuxième partie sont réalisées sur des machines à cinq axes.

5. Procédé de réalisation d'un élément moulant (1 ) destiné à être assemblé dans un moule pour le moulage d'un pneumatique selon l'une des revendications 1 à 4, dans lequel la deuxième partie (6) est une cavité.

6. Procédé de réalisation d'un élément moulant (1 ) destiné à être assemblé dans un moule pour le moulage d'un pneumatique selon l'une des revendications 1 à 4, dans lequel la deuxième partie (6) est une rainure.

## Patentansprüche

1. Verfahren zur Herstellung eines Formelements (1), das dazu bestimmt ist, in einer Form zum Formen eines Reifens zusammengefügt zu werden, wobei das Formelement (1) eine zum Formen eines Teils eines Reifens geeignete Formfläche (2) und eine der Formfläche gegenüberliegende Außenfläche (3) sowie Entlüftungsmittel (4), die zum Abführen eines Luftstroms von der Formfläche (2) zur Außenfläche (3) geeignet sind, umfasst, wobei die Entlüftungsmittel (4) einen ersten Teil (5) mit einer Mindestbreite L1 zwischen 0,03 mm und 0,07 mm und einer Tiefe P1 von 3 mm oder weniger, wobei der erste Teil (5) ein Schlitz ist, der in die Formfläche (2) mündet, und einen zweiten Teil (6), der mit dem ersten Teil (5) in Verbindung steht und in die Außenfläche (3) mündet, umfassen, wobei die Breite L2 des zweiten Teils zwischen 1 mm und 5 mm und noch bevorzugter zwischen 2 mm und 3 mm beträgt, wobei das Verfahren die folgenden Schritte umfasst:
i) einen Schritt der Herstellung des ersten Teils (5) im Formelement per Laser;
ii) einen Schritt der Herstellung des zweiten Teils (6) im Formelement durch maschinelle Bearbeitung, wobei die Tiefe P1 des Schlitzes um 0,1 bis 1 mm größer als die Dicke EP der durch die maschinelle Bearbeitung entstehenden Wand (7) ist;
iii) wobei der Schritt der Herstellung des zweiten Teils (6) vor dem Schritt der Herstellung des ersten Teils (5) ausgeführt wird.

2. Verfahren zur Herstellung eines Formelements (1), das dazu bestimmt ist, in einer Form zum Formen eines Reifens zusammengefügt zu werden, nach Anspruch 1, wobei der erste Teil (5) eine Strecke bildet, deren beide Enden nicht miteinander verbunden sind.

3. Verfahren zur Herstellung eines Formelements (1) das dazu bestimmt ist, in einer Form zum Formen eines Reifens zusammengefügt zu werden, nach einem der Ansprüche 1 oder 2, wobei der erste Teil (5) durch einen wasserstrahlgeführten Laser hergestellt wird.

4. Verfahren zur Herstellung eines Formelements (1), das dazu bestimmt ist, in einer Form zum Formen eines Reifens zusammengefügt zu werden, nach einem der Ansprüche 1 bis 3, wobei der erste Teil und der zweite Teil an fünfachsigen Maschinen hergestellt werden.

5. Verfahren zur Herstellung eines Formelements (1) das dazu bestimmt ist, in einer Form zum Formen eines Reifens zusammengefügt zu werden, nach einem der Ansprüche 1 bis 4, wobei der zweite Teil (6) ein Hohlraum ist.

6. Verfahren zur Herstellung eines Formelements (1) das dazu bestimmt ist, in einer Form zum Formen eines Reifens zusammengefügt zu werden, nach einem der Ansprüche 1 bis 4, wobei der zweite Teil (6) eine Nut ist.

## Claims

1. Method for creating a moulding element (1) intended to be assembled in a mould for moulding a tyre, said moulding element (1) comprising a moulding surface (2) designed for moulding part of the tyre, and an external surface (3) opposite to the moulding surface, venting means (4) suited to discharging a flow of air from the moulding surface (2) towards the external surface (3), said venting means (4) comprising a first part (5) of minimum width L1 comprised between 0.03 mm and 0.07 mm and of depth P1 less than or equal to 3 mm, said first part (5) being a slot opening onto the moulding surface (2), and a second part (6) in communication with the first part (5) and opening onto the external surface (3), the width L2 of the second part being comprised between 1 mm and 5 mm and more preferably between 2 mm and 3 mm, said method comprising the following steps:
i) a step of creating the first part (5) in the moulding element using a laser;
ii) a step of creating the second part (6) in the moulding element by machining, the depth P1 of the slot being 0.1 to 1 mm greater than the thickness EP of the wall (7) resulting from the machining operation;
iii) the step of creating the second part (6) is performed before the step of creating the first part (5).

2. Method for creating a moulding element (1) intended to be assembled in a mould for moulding a tyre according to Claim 1, wherein the first part (5) forms a path the two ends of which are disjointed.

3. Method for creating a moulding element (1) intended to be assembled in a mould for moulding a tyre according to one of Claims 1 and 2, wherein the first part (5) is produced by waterjet-guided laser.

4. Method for creating a moulding element (1) intended to be assembled in a mould for moulding a tyre according to either one of Claims 1 to 3, wherein the first part and the second part are produced on five-axis machines.

5. Method for creating a moulding element (1) intended to be assembled in a mould for moulding a tyre according to one of Claims 1 to 4, wherein the second part (6) is a cavity.

6. Method for creating a moulding element (1) intended to be assembled in a mould for moulding a tyre according to one of Claims 1 to 4, wherein the second part (6) is a groove.
